# EUROPEAN PATENT SPECIFICATION

(11) **EP 1 660 598 B1**
(45) Date of publication and mention of the grant of the patent: **21.11.2007**
(21) Application number: 04743581.3
(22) Date of filing: 26.07.2004
(51) Int. Cl.: C09D 11/10, C09D 11/00

(54) **A PRINTING INK**
DRUCKFARBE ODER -TINTE
ENCRE D'IMPRESSION

(30) Priority: 01.08.2003 GB 0318115
(43) Date of publication of application: 31.05.2006
(73) Proprietor: SERICOL LIMITED, Broadstairs, Kent CT10 2LE (GB)
(72) Inventor: NOUTARY, Carole, Broadstairs, Kent CT10 1HZ (GB); RUNACRE, Angelique Catherine Joyce, Kent CT11 8AS (GB)
(74) Representative: Gillard, Richard Edward
(86) International application number: PCT/GB2004/003254
(87) International publication number: WO 2005/012448

(56) References cited:
- EP-A- 0 373 862
- EP-A- 0 555 070
- US-A- 4 554 240
- US-A- 4 564 580
- US-A- 5 994 033

## Description

This invention relates to a printing ink and in particular to a water-based UV curable printing ink which may be applied by ink-jet printing.

Various ink technologies are known in the art, such as solvent-based inks, water-based inks and radiation curable inks.

Solvent-based inks dry by evaporation of a solvent and therefore typically contain a binder, colorant and as a major component of the liquid phase incorporates low boiling point liquid. In one common type this liquid is water - see for example the paper by Henry R. Kang in the Journal of Imaging Science, 35(3), pages 179-181 (1991). In another common type, the liquid is a low boiling solvent or mixture of solvents - see, for example, EP 0 314 403 as well as EP 0 424 714 and WO 01/36546.

Another type of ink contains unsaturated organic monomers which polymerise by irradiation, commonly with ultraviolet light, in the presence of a photoinitiator. In that case the print is exposed to radiation to cure or harden it, a process that is more rapid than evaporation of solvent at moderate temperatures. Examples of such systems are disclosed in EP 0540 203, US 5,270,368, WO 97/31071 and JP 2000-2220526.

One drawback of UV curable inks is that they give prints with high ink build when used in four-colour process printing and therefore can reduce print quality.

To reduce the thickness of the ink film and optimise print quality, while maintaining the benefits of UV technology, water-based UV curable inks can be used. Examples of such systems may be found in US 5,623,001 and GB 2 256 874.

In practice, water-based UV curing technology is limited by the availability of UV reactive raw materials that can be incorporated into an aqueous system. When developing inks for ink-jet printing, where the viscosity of the ink has to be low, typically less than 50 mPas at 25°C, very few UV reactive materials meet the requirements of both low viscosity and water compatibility.

There is therefore a need for low viscosity water-based UV curable inks incorporating UV reactive materials that can be introduced into an aqueous medium and provides good printing properties.

Accordingly, the present invention provides an ink-jet ink comprising (i) water and (ii) a polymer having a plurality of 1,2- and/or 1,3-diol groups along the polymer backbone and having pendant photo cross-linkable groups attached thereto, wherein the ink has a viscosity of less than 50 mPa at 25°C.

The hydrophilicity of the photoreactive polymer (e.g. polyvinyl alcohol) allows for the incorporation of large amounts of water in the ink thereby providing a low viscosity ink suitable for ink-jet printing. In addition, the photo cross-linkable groups attached to the polymer (e.g. polyvinyl alcohol) allow for the incorporation of a wide range of UV reactive monomers and/or oligomers, such as acrylates, epoxides and oxetanes. The inks are homogenous UV curable water-based inks that have good end-user properties suitable for ink-jet printing.

The polymer is preferably polyvinyl alcohol but other polyhydroxy compounds may be used, such as cellulose or hydroxyalkyl derivatives of cellulose, e.g. hydroxyethyl cellulose, hydroxypropyl cellulose and ethyl hydroxyethyl cellulose.

Polyvinyl alcohols are typically produced by the hydrolysis of polyvinyl acetate, and the water solubility of the resulting polyvinyl acetate is related both to the molecular weight and to the degree of hydrolysis of the polyvinyl acetate. In general, water solubility requires at least 70% of the acetate groups of the precursor polyvinyl acetate to have been hydrolysed to hydroxy groups. However, totally hydrolysed polyvinyl alcohols are usually only slightly soluble in cold water as a result of strong inter-molecular hydrogen bonding. Thus, the degree of hydrolysis of polyvinyl alcohol is preferably from 75 to 99 percent, and more preferably from 85 to 90 percent. Lower molecular weight polyvinyl alcohols tend to be more soluble in water than higher molecular weight grades. The degree of polymerisation of the polyvinyl alcohol is preferably from 350 to 2500.

The use of polyhydroxy polymers in photo cross-linkable compositions is known in the art of producing screen-printing stencils. The photosensitivity of the composition is achieved by grafting photo cross-linkable groups onto the water-soluble polymer. The preparation of the polyvinyl alcohol having pendant photo cross-linkable groups attached thereto of the present invention is known in the art. See, for example, GB 2 030 575 and US 5,994,033.

GB 2 030 575 describes the cross-linking of polyvinyl alcohol with pendant styryl pyridinium groups that polymerise under exposure to UV light via a dimerisation reaction.

US 5,994,033 describes the cross-linking of polyvinyl alcohol with pendant acrylate groups that polymerise through a radical initiated reaction under exposure to UV light and in the presence of a photoinitiator. The preferred acrylate is 2-acryloyloxyethyl 4-formylbenzoate. Further examples of polyvinyl alcohols with pendant phototpolymerisable groups may be found in US 4,564,580 and EP 0 373 862.

Grafting of the photo cross-linkable groups, such as styryl pyridinium and/or acrylate groups, may be carried out using any suitable procedure and the precise method of attachment is not material to the present invention. A preferred method is to form an aldehyde precursor of the pendant group and then react the aldehyde precursor of the pendant group with the 1,3 diol groups on polyvinyl alcohol in an aqueous solution by an aldol reaction under acidic conditions as described in US 5,994,033. When grafting an acrylate group, the use of a small amount of solvent may be required to optimise the grafting process.

Suitable monomers for grafting to the polymer to form the photo cross-linkable groups include: 4-(4-formylphenylethenyl)-1-methylpyridinium methosulfate, 1-(3-ethoxycarbonylmethyl)-4-[2-(4-formylphenyl)ethenyl]pyridinium bromide, 1-(methoxycarbonylpropyl)-4-[2-(4-formylphenyl)ethenyl]pyridinium bromide, 2-acryloyloxyethyl 4-formylbenzoate and 4-(2-acryloyloxyethoxy)benzaldehyde. However, the precise nature of the groups is not material provided they are photopolymerisable and attachable to the polyhydroxy polymer.

The photo cross-linkable groups cross-link, i.e. cure, by irradiation with light, preferably UV light.

Preferably the photosensitive polymer is present from 0.5 to 60% by weight based on the total weight of the ink (i.e. based on the total weight of the ink), more preferably from 0.5 to 10% by weight.

Preferably the photo cross-linkable groups are present from 0.1 up to 25% by weight based on amount of polymer.

The ink preferably contains from 10 to 90% by weight of water based on the total weight of the ink, more preferably from 30 to 90% by weight. Other solvents, such as water-miscible organic solvents, may also be present.

An advantage of the present invention is that a wide range of additional UV reactive materials may be introduced in the water-based UV curable ink while maintaining a homogenous aqueous solution. The ability to incorporate a wide range of reactive materials allows the optimisation of the formulation for end-user properties such as cure speed, adhesion and flexibility. Materials which may be used are (meth)acrylate, i.e. acrylate and/or methacrylate, monomers and oligomers, epoxides and oxetanes.

Acrylate monomers which may be used include phenoxy ethyl acrylate, octyl decyl acrylate, tetrahydrofuryl acrylate, isobornyl acrylate, hexanediol diacrylate, trimethylolpropane triacrylate, pentaerythritol triacrylate, polyethylene glycol diacrylate (e.g. tetraethylene glycol diacrylate), dipropylene glycol diacrylate, tri(propylene glycol) triacrylate, neopentyl glycol diacrylate, bis(pentaerythritol) hexa-acrylate, and the acrylate esters of ethoxylated or propoxylated glycols and polyols, e.g. propoxylated neopentyl glycol diacrylate, ethoxylated trimethylolpropane triacrylate, and mixtures thereof.

Examples of acrylate oligomers that can be used include ethoxylated polyethylene glycols, ethoxylated trimethylol propane acrylate and polyether acrylate and their ethoxylates, and urethane acrylate oligomers.

Esters of methacrylic acid (i.e. methacrylates) may be, for example, hexanediol dimethacrylate, trimethylolpropane trimacrylate, triethylene glycol dimethacrylate, diethylene glycol dimethacrylate, ethylene glycol dimethacrylate, 1,4-butanediol dimethacrylate or mixtures thereof.

Epoxides which may be used in the ink formulation are Uvacure 1500, Uvacure 1501, Uvacure 1502 from UCB Chemicals, UVR 6105, UVR 6110 and UVR 6128 from Dow.

Oxetane monomers which may be used include 3-ethyl-3-hydroxymethyl-oxetane, bis{[1-ethyl(3-oxetanil)]methyl} ether and 3-ethyl-3-[(2-ethylhexyloxy)methyl] oxetane.

Preferably the (meth)acrylate, epoxide or oxetane monomers are present from 1 to 80% by weight, more preferably from 10 to 40% by weight based on the total weight of the ink.

Preferably the oligomers are present from 1 to 80 percent by weight, more preferably from 1 to 10% by weight based on the total weight of the ink.

When (meth)acrylate groups are present in the formulation (grafted onto the polymer or as "free" monomers), a radical photoinitiator is used to initiate the photopolymerisation of the (meth)acrylate groups.

Examples of radical photoinitiators are benzophenone, 1-hydroxycyclohexyl phenyl ketone, 2-benzyl-2-dimethylamino-(4-morpholinophenyl)butan-1-one, benzil dimethylketal, bis(2,6-dimethylbenzoyl)-2,4,4-trimethylpentylphosphine oxide or mixtures thereof. Such photoinitiators are known and commercially available for example under the trade names Irgacure, Darocure from Ciba and Lucerin from BASF. Mixtures of photoinitiators may also be used.

When epoxides or oxetanes are used in the ink formulation, a cationic photoinitiator is used to initiate the photopolymerisation.

Examples of cationic photoinitiators are iodonium salts such as Rhodorsil PI 2074 from Rhodia, MC AA, MC BB, MC CC, MC CC PF, MC SD from Siber Hegner and UV9380c from Alfa Chemicals. Sulfonium salts may also be used, such as UVI-6972, UVI-6974, UVI-6976, UVI-6990, UVI-6992 from Dow and Uvacure 1590 from UCB Chemicals.

Preferably the photoinitiator is present from 1 to 20% by weight based on the total weight of the ink.

The present invention may also include a colouring agent which may be either dissolved or dispersed in the liquid medium of the ink. Preferably the colouring agent is a dispersible pigment of the types known in the art and commercially available, such as under the trade names Paliotol from BASF, Cinquasia and Irgalite both available from Ciba Speciality Chemicals and Hostaperm from Clariant UK. The pigment may be of any desired colour, such as Pigment Yellow 13, Pigment Yellow 83, Pigment Red 9, Pigment Red 184, Pigment Blue 15:3, Pigment Green 7, Pigment green 36, Pigment Violet 19, Pigment Black 7or Pigment Orange 43. Especially useful are black and the colours required for four-colour process printing. Mixtures of pigments may be used.

The total proportion of pigment or colorant present is preferably from 0.5 to 20% by weight based on the total weight of the ink.

Other components of types known in the art may be present in the ink to improve the properties or performance. These components may be, for example, surfactants, defoamers, humectants, dispersants, synergists for the photoinitiator, stabilisers against deterioration by heat or light, reodorants, flow or slip aids, biocides and/or identifying tracers.

The ink is formulated as an ink-jet ink and the viscosity is less than 50 mPas at 25°C, more preferably less than 25 mPas. Typically, when ejected through the nozzles, the ink should have a viscosity of 10.5 mPas at the jetting temperature, which is usually elevated to about 40°C (the ink might have a much higher viscosity at ambient temperature). Some print heads require especially low viscosity, such as 4 or 5 mPas at the jetting temperature, to achieve reliable jetting performance. The particle size of any particulates resent in the ink-jet ink should be sufficiently small to allow the ink to pass through the ink-jet printer nozzle, typically less than 5µm.

### Examples

2-Acryloyloxyethyl 4-formylbenzoate (AB) was synthesised as described in US 5,994,033. 4-(4-Formylphenylethenyl)-1-methylpyridinium methosulfate (SbQ salt) was obtained from Showa Kako Cooperation.

GLO5 and GLO3 from Gohsenol are polyvinyl alcohols having a low degree of polymerisation and a degree of hydrolysis of 88%. Both are relatively low molecular weight grades of PVOH, GL03 having a number average molecular weight of 300 and GL05 having a number average molecular weight of 500.

All of the quantities expressed in the examples are, unless otherwise stated, percentages by weight.

### Example 1

### PVOH grafted with AB

Polyvinyl alcohol was grafted with AB by an aldol reaction. To aid incorporation, the AB was mixed with DPM solvent and added to the aqueous PVOH solution (20% aqueous solution of Gohsenol GLO5) and further water under shear. A 25% aqueous solution of para-toluene sulfonic acid was added dropwise until a pH of 1.85 was achieved in order to create the acidic conditions required for the reaction to take place. The reaction conditions were maintained at 25°C for a period of 16-24 hours and then neutralised with a 10% aqueous solution of NaOH.

| | |
|---|---|
| AB | 1.48 |
| (2-methoxymethylethoxy) propanol (DPM Solvent from Univar) | 10.95 |
| Gohsenol GLO5 | 14.78 |
| Water | 72.79 |
| Para-toluene sulfonic acid (25% aqueous solution) | Trace |
| Sodium Hydroxide (10% aqueous solution) | Trace |

### Example 2

### Low-cost ink for absorbent surfaces

The grafted material from Example 1 was then used in the following formulation to produce an ink suitable for absorbent surfaces. Water was added slowly to the Hostafine pigment dispersion under low shear. The AB grafted PVOH solution from Example 1 was added to this and the photoinitiator added finally under a higher shear.

| | |
|---|---|
| AB-grafted PVOH solution from Example 1 | 35.10 |
| Water | 52.60 |
| Irgacure 500 (Photoinitiator from CIBA) | 8.80 |
| Hostafine Blue B2G (Pigment dispersion from clariant) | 3.50 |

This formulation produced an ink with a viscosity of 19.3 mPas at 25°Cwhich gave good adhesion and cure speed when coated onto absorbent substrates and when exposed to UV light with an iron doped lamp of 120 W/cm at 20 m/min. To improve spreading on certain substrates, it is necessary to add a wetting agent to this formulation in order to reduce the surface tension of the product.

### Example 3

### Ink for non-absorbent surfaces

In order to achieve good adhesion to non-absorbent surfaces it is necessary to incorporate hydrophobic acrylate monomers. It was necessary to blend all the UV components together separately and then add this to a 50% aqueous dilution of the AB-grafted PVOH solution (from Example 1) slowly under high shear, adding water, methoxy propanol and Zonyl FSN as a final stage.

| | |
|---|---|
| AB-grafted PVOH solution from Example 1 | 13.00 |
| Water | 13.00 |

Add the following UV mixture to the AB-grafted PVOH solution under shear:

| | |
|---|---|
| Solsperse 32,000 (hyperdispersant from Avecia) | 0.40 |
| Genorad 16 (Stabiliser from Rahn) | 0.04 |
| Actilane 422 (UV monomer from Akzo Nobel) | 2.36 |
| Irgalite Blue GLVO (pigment from Ciba) | 1.20 |
| Ebecryl 220 (oligomer from UCB) | 8.00 |
| Hexanediol diacrylate (UV diluent from UCB) | 24.00 |
| Lucirin TPO (photoinitiator from BASF) | 7.00 |

Add the following:

| | |
|---|---|
| Methoxy Propanol (solvent from Univar) | 10.00 |
| Water | 20.00 |
| Zonyl FSN (surfactant from Goldschmit) | 1.00 |

The resultant ink had a viscosity of 47.7 mPas at 25°C and a surface tension of 29 dynes/cm. When an 8 micron coating was applied and cured under a 120 W/cm mercury lamp at 40 m/min the ink exhibited excellent cure and adhesion on self-adhesive vinyl.

### Example 4

### Grafting using a lower molecular weight PVOH

In order to produce a lower viscosity ink an effective way is to use a lower molecular weight PVOH. Grafting was carried out using AB as Example 1 but using a lower molecular weight PVOH, namely Goshenol GL03 in the same quantities. The adduct was then used in the ink formula as in Example 3.

The resultant ink had a viscosity of 31.6 mPas at 25°C and a surface tension of 29 dynes/cm. An 8 micron coating, when cured under a 120 W/cm mercury lamp at 40 m/min, exhibited excellent cure and adhesion on absorbent and non-absorbent substrates and also showed good water resistance.

### Example 5

### PVOH grafting using SbQ salts

A 6% aqueous solution of 4-(4-formylphenylethenyl)-1-methylpyridinium methosulfate (SbQ salt) obtained from Showa Kako Corp. was grafted with a 20% aqueous solution of PVOH (Gohsenol GLO5) by the aldol reaction. The SbQ salt was added to the aqueous PVOH solution under shear, and a 25% aqueous solution of para-toluene sulfonic acid was added dropwise until a pH of 1.85 was achieved in order to create the acidic conditions required for the reaction to take place. The reaction conditions were maintained at 25°C for a period of 16-24 hours and then neutralised with a 10% aqueous solution of NaOH.

| | |
|---|---|
| GL05 (polyvinyl alcohol from Gohsenol) | 73.9 |
| SbQ (salt from Showa Kako Corp.) | 26.1 |
| Para-toluene sulfonic acid (25% aqueous solution) | Trace |
| Sodium Hydroxide (10% aqueous solution) | Trace |

### Example 6

### Ink from SBQ-PVOH adduct

The grafted material from Example 5 was then used in the following formulation to produce ink. Water was added slowly to the Hostafine pigment dispersion under low shear. The SbQ-grafted PVOH solution was added to this under high shear.

| | |
|---|---|
| SbQ-grafted PVOH solution from Example 5 | 29.10 |
| Water | 67.10 |
| Hostafine Blue B2G (pigment dispersion from Clariant) | 3.80 |

The resultant ink had a viscosity of 11.6 mPas at 25°C. When cured under a 120 W/cm mercury lamp at 40 m/min the ink exhibited cure and adhesion on absorbent substrates. Cure and adhesion onto non-absorbent substrates was achieved with a degree of post-hardening. Adhesion onto non-absorbent substrates could be further achieved by the addition of a heating station prior to UV curing.

### Example 7

### Ink for non-absorbent surfaces based on SbQ-PVOH adduct

In order to incorporate successfully hydrophobic acrylate material with aqueous products it was necessary to blend all the UV components together first and then add this to a 50% aqueous dilution of the SbQ grafted PVOH solution (described in Example 5) slowly under high shear and then add further water, and surfactant to produce a homogenous low viscosity clearcoat. The pigment dispersion was then added to this under shear.

Blend on Silverson mixer:

| | |
|---|---|
| SbQ-grafted PVOH solution from Example 5 | 19.30 |
| Water | 19.30 |

The following UV mix was added to the aqueous grafted PVOH under high shear:

| | |
|---|---|
| Actilane 421 (UV monomer from Akzo Nobel) | 22.70 |
| Ebecryl 220 (oligomer from UCB) | 8.80 |
| Irgacure 500 (photoinitiator from Ciba) | 3.60 |
| Byk 307(surfactant from Blagden) | 0.20 |

Then add and stir till incorporated:

| | |
|---|---|
| Zonyl FSN (surfactant from Goldschmit) | 0.90 |
| Actilane 800 (additive from Akros) | 0.70 |
| Water | 21.0 |

Finally add slowly and then stir at high shear:

| | |
|---|---|
| Aqueous yellow pigment dispersion (from Penn Colours) | 3.50 |

The resultant ink had a viscosity of 49.6 mPas at 25°C and a surface tension of 27 dynes/cm. When cured under a 120 W/cm mercury lamp at 40 m/min the ink exhibited excellent cure and adhesion on absorbent substrates.

### Example 8

### Same method as Examples 5 and 7 but using a lower molecular weight PVOH

SbQ-PVOH adduct

| | |
|---|---|
| 20% Aqueous GL03 (polyvinyl alcohol from Gohsenol) | 73.9 |
| 6% Aqueous SbQ (salt from Showa) | 26.1 |
| Para-toluene sulfonic acid (25% aqueous solution) | Trace |
| Sodium Hydroxide (10% aqueous solution) | Trace |

### Ink formulation

Blend on a High speed mixer:

| | |
|---|---|
| SbQ-grafted PVOH solution | 20.00 |
| Water | 20.00 |

Blend the following on high-speed stirrer and then add to SbQ/water mix:

| | |
|---|---|
| Solsperse 32,000 (hyperdispersant from Avecia) | 0.45 |
| Genorad 16 (Stabiliser from Rahn) | 0.05 |
| Actilane 421 (UV diluent from Akros) | 2.66 |
| Irgalite Blue GLVO (pigment from Ciba) | 1.35 |
| Actilane 422 (UV diluent from Akros) | 17.50 |
| Ebecryl 220 (oligomer from UCB) | 7.00 |
| Lucirin TPO (photoinitiator from BASF) | 5.00 |
| Irgacure 500 (photoinitiator from Ciba) | 5.00 |

Then add:

| | |
|---|---|
| Water | 19.99 |
| Zonyl FSN (surfactant from Goldschmit) | 1.00 |

The resultant ink had a viscosity of 15.4 mPas at 25°C and a surface tension of 28 dynes/cm. When an 8 micron film was coated and then cured under a 120 W/cm mercury lamp at 40 m/min the ink exhibited good cure and adhesion on a range of substrates.

### Example 9

### PVOH grafted with AB and SbQ

In this example a combination of styril pyridinium and AB grafted onto polyvinyl alcohol was used. The same method of grafting was used as in Examples 1 and 5. AB was mixed with DPM and then added to a mixture aqueous PVOH and aqueous SbQ salt at pH 1.85 at 25°C and then neutralised with 10% aqueous NaOH after 16-20 hours.

| | |
|---|---|
| 20% Aqueous GL03 (polyvinyl alcohol from Gohsenol) | 73.89 |
| 5% Aqueous SbQ (salt from Showa) | 24.12 |
| Para-toluene sulfonic acid (25% aqueous solution) | Trace |
| Sodium Hydroxide (10% aqueous solution) | Trace |
| 12% AB in methoxy propanol (DPM solvent from Univar) | 1.99 |

### Example 10

### Ink based on SbQ/AB-PVOH adduct

Blend on high shear mixer:

| | |
|---|---|
| SbQ/AB grafted PVOH solution from Example 9 | 10.68 |
| Water | 7.12 |

Mix on high shear mixer and add to SbQ/AB/Water blend:

| | |
|---|---|
| Solsperse 32,000 (hyperdispersant from Avecia) | 0.44 |
| Genorad 16 (Stabiliser from Rahn) | 0.04 |
| Actilane 421 (UV diluent from Akros) | 2.60 |
| Irgalite Blue GLVO (pigment from Ciba) | 1.32 |
| Ebecryl 220 (oligomer from UCB) | 8.80 |
| Lucirin TPO (photoinitiator from BASF) | 7.70 |
| Hexanediol diacrylate (UV diluent from UCB) | 26.40 |

Then add:

| | |
|---|---|
| Methoxy propanol (solvent from Univar) | 6.80 |
| Water | 27.4 |
| Zonyl FSN (surfactant from Goldschmit) | 0.70 |

The resultant ink had a viscosity of 33.6 mPas at 25°C and a surface tension of 30 dynes/cm. When cured under a 120 W/cm mercury lamp at 40 m/min the ink exhibited good cure, adhesion, and water resistance on both absorbent and non-absorbent substrates.

## Claims

1. An ink-jet ink comprising (i) water and (ii) a polymer having a plurality of 1,2- and/or 1,3-diol groups along the polymer backbone and having pendant photo cross-linkable groups attached thereto, wherein the ink has a viscosity of less than 50 mPa at 25°C.

2. An ink as claimed in claim 1, wherein the polymer is a polyvinyl alcohol.

3. An ink as claimed in claim 1 or 2, wherein the pendant photo cross-linkable groups are styryl pyridinium and/or acrylate groups.

4. An ink as claimed in any preceding claim, where the pendant cross-linkable group is present from 0.1 to 25% by weight based on the weight of the polymer.

5. An ink as claimed in any preceding claim, wherein the polymer is polyvinyl alcohol which is derived from polyvinyl acetate in which at least 70% of the acetate groups are hydrolysed.

6. An ink as claimed in any preceding claim, wherein the polymer has a degree of polymerisation of 350 to 2500.

7. An ink as claimed in any preceding claim, wherein the polymer is present from 0.5 to 60% by weight based on the total weight of the ink.

8. An ink as claimed in any preceding claim, wherein the water is present from 10 to 90% by weight based on the total weight of the ink.

9. An ink as claimed in any preceding claim, further comprising UV reactive monomers and/or oligomers.

10. An ink as claimed in any preceding claim, wherein the UV reactive monomers and/or oligomers are (meth)acrylates, epoxides or oxetanes.

11. An ink as claimed in any preceding claim, further comprising a photoinitiator.

12. An ink as claimed in any preceding claim, further comprising a colorant.

## Patentansprüche

1. Tintenstrahldruckfarbe, umfassend (i) Wasser und (ii) ein Polymer mit einer Vielzahl an 1,2- und/oder 1,3-Diolgruppen entlang der Polymerhauptkette und mit daran angefügten, anhängenden photovernetzbaren Gruppen, wobei die Druckfarbe eine Viskosität von weniger als 50 mPa bei 25°C aufweist.

2. Druckfarbe nach Anspruch 1, wobei das Polymer ein Polyvinylalkohol ist.

3. Druckfarbe nach Anspruch 1 oder 2, wobei die anhängenden photovernetzbaren Gruppen Styrylpyridinium- und/oder Acrylatgruppen sind.

4. Druckfarbe nach einem der voranstehenden Ansprüche, wobei die anhängende vernetzbare Gruppe in einer Menge von 0,1 bis 25 Gew.-% bezogen auf das Gewicht des Polymers vorhanden ist.

5. Druckfarbe nach einem der voranstehenden Ansprüche, wobei das Polymer Polyvinylalkohol ist, der von Polyvinylacetat abgeleitet ist, bei dem mindestens 70% der Acetatgruppen hydrolysiert sind.

6. Druckfarbe nach einem der voranstehenden Ansprüche, wobei das Polymer einen Polymerisationsgrad von 350 bis 2500 aufweist.

7. Druckfarbe nach einem der voranstehenden Ansprüche, wobei das Polymer in einer Menge von 0,5 bis 60 Gew.-% bezogen auf das Gesamtgewicht der Druckfarbe vorhanden ist.

8. Druckfarbe nach einem der voranstehenden Ansprüche, wobei das Wasser in einer Menge von 10 bis 90 Gew.-% bezogen auf das Gesamtgewicht der Druckfarbe vorhanden ist.

9. Druckfarbe nach einem der voranstehenden Ansprüche, die des Weiteren UV-reaktive Monomere und/oder Oligomere umfasst.

10. Druckfarbe nach einem der voranstehenden Ansprüche, wobei die UV-reaktiven Monomer und/oder Oligomere (Meth)acrylate, Epoxide oder Oxetane sind.

11. Druckfarbe nach einem der voranstehenden Ansprüche, die des Weiteren einen Photoinitiator umfasst.

12. Druckfarbe nach einem der voranstehenden Ansprüche, die des Weiteren ein Farbmittel umfasst.

## Revendications

1. Encre pour jet d'encre comprenant (1) de l'eau et (ii) un polymère ayant une pluralité de groupes 1,2-et/ou 1,3-diol le long du squelette du polymère et ayant des groupes latéraux photoréticulables attachés à celui-ci, laquelle encre ayant une viscosité inférieure à 50 mPa.s à 25°C.

2. Encre selon la revendication 1, dans laquelle le polymère est un alcool polyvinylique.

3. Encre selon la revendication 1 ou 2, dans laquelle les groupes latéraux photoréticulables sont des groupes styrylpyridinium et/ou acrylate.

4. Encre selon l'une quelconque des revendications précédentes, dans laquelle le groupe latéral réticulable est présent en une quantité de 0,1 à 25% en poids sur la base du poids du polymère.

5. Encre selon l'une quelconque des revendications précédentes, dans laquelle le polymère est un alcool polyvinylique qui esL dérivé d'un poly(acétate de vinyle) dans lequel au moins 70 % des groupes acétate sont hydrolysés.

6. Encre selon l'une quelconque des revendications précédentes, dans laquelle le polymère a un degré de polymérisation de 350 à 2500.

7. Encre selon l'une quelconque des revendications précédentes, dans laquelle le polymère esL présent en une quantité de 0,5 à 60 % en poids sur la base du poids total de l'encre.

8. Encre selon l'une quelconque des revendications précédentes, dans laquelle l'eau esL présente en une quantité de 10 à 90 % en poids sur la base du poids total de l'encre.

9. Encre selon l'une quelconque des revendications précédentes, comprenant en outre des monomères et/ou oligomères réactifs aux rayons UV.

10. Encre selon l'une quelconque des revendications précédentes, dans laquelle les monomères et/ou oligomères réactifs aux rayons UV sont des (méth)acrylates, des époxydes ou des oxétancs.

11. Encre selon l'une quelconque des revendications précédentes, comprenant en outre un photoinitiateur.

12. Encre selon l'une quelconque des revendications précédentes, comprenant en outre un colorant.
